# EUROPÄISCHE PATENTANMELDUNG

(11) **EP 1 569 052 A2**
(43) Veröffentlichungstag der Anmeldung: **31.08.2005**
(21) Anmeldenummer: 05001166.7
(22) Anmeldetag: 21.01.2005
(51) Int. Cl.: G03H 1/02, G03H 1/04, G03H 1/26, B42D 15/10

(54) **Verfahren und Vorrichtung zum Aufbringen von diffraktiven Elementen auf Oberflächen**

(30) Priorität: 24.02.2004 DE 102004009422
(71) Anmelder: Metronic AG, 97209 Veitshöchheim (DE)
(72) Erfinder: Schmitt , Peter Dipl.-Phys., 97074 Würzburg (DE)
(74) Vertreter: COHAUSZ DAWIDOWICZ HANNIG & SOZIEN

(57) **Zusammenfassung**

Die Erfindung betrifft ein Verfahren zur Herstellung von diffraktiven Elementen, insbesondere von Hologrammen, auf der Oberfläche eines Gegenstands, wobei in eine auf der Oberfläche aufgetragenen lichtempfindlichen Aufzeichnungsschicht eine holographische Information übertragen wird, insbesondere durch Belichtung, wobei in einem sich wiederholenden Herstellungsprozeß aufeinanderfolgend herzustellende diffraktive Elemente variiert werden durch Änderung der zu übertragenden holographischen Information und/oder durch Änderung der Anordnung der lichtempfindlichen Aufzeichnungsschicht auf der Oberfläche. Die Erfindung betrifft weiterhin einen Gegenstand mit mindestens einem diffraktiven Element, insbesondere einer holographischen Kennzeichnung, sowie eine Vorrichtung zur Herstellung eines solchen Gegenstandes.

## Beschreibung

Die Erfindung betrifft ein Verfahren zur Herstellung von diffraktiven Elementen, insbesondere von Hologrammen, auf der Oberfläche eines Gegenstands, wobei in eine auf der Oberfläche aufgetragenen lichtempfindlichen Aufzeichnungsschicht eine holographische Information übertragen wird, insbesondere durch Belichtung. Die Erfindung betrifft weiterhin einen mit einem solchen Verfahren hergestellten Gegenstand sowie eine Vorrichtung zur Durchführung des Verfahrens.

Die Geschichte der Holographie wurde begründet mit den Arbeiten von Dennis Gabor, der als erster die Grundlagen erarbeitete und beschrieb. Heute finden sich eine Vielzahl von abgewandelten Verfahren, die ein Grundprinzip der Holographie, die Interferenz von Lichtwellen miteinander, ausnutzen um spezielle Effekte zu erzeugen. Am weitesten verbreitet sind die sogenannten Regenbogenhologramme, die durch ein spezielles Umkopierverfahren von einem Masterhologramm erzeugt werden.

Bei dieser Kopie geht zwar eine Dimension der räumlichen Darstellung weitgehend verloren, dafür gewinnt man aber ein reines Oberflächenhologramm, welches sich mit geeigneten Prägewalzen leicht und kostengünstig in der Regel in Kunststofffolien vervielfältigen lässt. Meist werden die so erzeugten Oberflächenstrukturen dieser Prägehologramme noch mit einer Metallschicht bedampft, wodurch die Beugungseffizienz der Hologramme sehr stark verbessert wird. Eine weitere Beschichtung mit Lack oder die Versiegelung innerhalb eines Laminats in einem nachfolgenden Schritt schützt die erzeugten Mikrostrukturen gegen äußere Einflüsse unter anderem auch gegen ein unbefugtes Kopieren durch Abformtechniken. Der genannte Verlust einer räumlichen Dimension erzeugt andererseits einen Regenbogeneffekt, das heißt das betrachtete Bild ändert abhängig von Betrachtungswinkel seine Farbe.

Solche Hologramme oder allgemein diffraktive Elemente werden zum Beispiel als schillernde Verpackungsmaterialien oder als Aufkleber verwendet. Komplexere Strukturen, die unter verschiedenen Winkeln zusätzlich unterschiedliche Informationen zeigen, Mikrotexte beinhalten oder Bewegungsabläufe darstellen, werden zum Beispiel als Sicherheitsmerkmal auf Banknoten, Ausweisdokumenten oder anderen schützenswerten Produkten verwendet.

Alle diese Hologramme, insbesondere die Regenbogenhologramme tragen jedoch stets statische holographische Informationen, das heißt Informationen, die nicht individuell von Hologramm zu Hologramm innerhalb eines sich insbesondere wiederholenden Produktionsprozesses an variable äußere Daten angepasst werden können.

Zur Herstellung von echten Hologrammen, wie sie für die Masterherstellung benötigt werden, werden Glasplatten oder Folien verwendet, die mit einer lichtempfindlichen Aufzeichnungsschicht belegt sind. Als lichtempfindliche Substanzen werden häufig die aus der Photographie bekannten Silberhalogenid-Emulsionen verwendet, da diese zum einen gut kommerziell erhältlich sind und zum anderen neben einer hohen Lichtempfindlichkeit auch eine feine Körnung der Silbersalze aufweisen können.

Das Masterhologramm wird in einer bekannten Anordnung unter Verwendung von Laserlicht erzeugt, oder im Falle eines computer-generierten Hologramms direkt mit einer entsprechenden Belichtereinheit in die photoempfindliche Schicht geschrieben. Derartige holographische Belichteranordnungen sind dem Fachmann an sich bekannt.

Nach der nass-chemischen Entwicklung und Fixierung werden nun von diesem Masterhologramm Kopien erstellt, die meist schon den genannten Regenbogeneffekt aufweisen. Diese Kopien werden meist in photoempfindlichen Thermoplasten erzeugt, mit denen es möglich ist Oberflächenstrukturen zu erzeugen. Diese Oberflächenstrukturen werden in einem nachfolgenden Schritt leitfähig beschichtet. In einem darauffolgenden galvanischen Prozess werden Nickelschichten mit einer Dicke von einigen 100µm auf der so leitfähig gemachten Oberfläche abgeschieden. Diese so erzeugten Nickelplatten, sogenannte Shim's, dienen als Prägeplatten für die Vervielfältigung in einer Prägemaschine. Es ist leicht zu erkennen, daß der gesamte Prozess bis zur Vervielfältigung von Hologrammen aufwändig und langwierig ist und keine Individualisierung bzw. Personalisierung der Hologramme zuläßt, da aufgrund eines vorgegebenen Masterhologrammes alle nachfolgend hergestellten Kopien zwangsläufig identisch sind.

Alternativ zu den beschriebenen Silberhalogenid-Schichten existieren Photopolymere, die aufgrund ihrer Zusammensetzung ebenfalls zur Herstellung von Hologrammen verwendet werden. Die Zusammensetzung besteht im wesentlichen aus Monomeren, Oligomeren, Photoinitiatoren und Sensibilisierungsstoffen. Solche Polymere und fertige Filme werden z.B. von der Firma DuPont hergestellt und vertrieben.

Die Herstellung eines Hologrammes unter Verwendung dieser Polymere erfolgt dergestallt, daß die Polymerschicht in einer entsprechenden holographischen Anordnung mit Licht einer geeigneten Wellenlänge bestrahlt wird. Zweckmäßigerweise verwendet man hierzu Laserlicht aufgrund der hohen Lichtleistung, der hohen Monochromasie und der erforderlichen Kohärenzlänge. Die maximale spektrale Empfindlichkeit dieser Polymere liegt in Abhängigkeit ihrer Zusammensetzung und eventuellen Sensibilisierung im ultravioletten, im blauen, im grünen oder im roten Bereich des optischen Spektrums. Eingesetzt werden können daher beispielsweise Argon-Ionen Laser, Krypton-Ionen-Laser, RubinLaser, Helium-Neon-Laser, Metalldampflaser oder auch frequenzverdoppelte Neodym YAG-Laser, oder allgemein frequenzvervielfachte Infrarotlaser, wie sie kommerziell erhältlich sind. Ebenfalls können Diodenlaser verwendet werden. Der verwendete Laser kann dabei im kontinuierlichen Betrieb oder im gepulsten Betrieb arbeiten, was lediglich eine Anpassung der Belichtungsparameter innerhalb der Anordnung erfordert.

Die Belichtung der Polymerschicht erfolgt während der holographischen Aufnahme aufgrund der auf sie auftreffenden, räumlich modulierten Wellenfront nicht an jeder Stelle der Polymerschicht gleichartig, so daß Punkte oder Zonen mit intensiver Belichtung neben Zonen mit geringer Belichtung liegen. An den Stellen intensiver Belichtung beginnt durch die einfallende Strahlung eine Polymerisation der Monomere, wodurch ein Konzentrationsgefälle an Monomeren von den unbelichteten Stellen zu den belichteten Stellen entsteht.

Aufgrund dieses Konzentrationsgefälles wandern nun Monomere in die Zonen der intensiven Belichtung. Dadurch wird eine lokale Veränderung des Brechungsindexes der Schicht erzeugt, die identisch zu der räumlich modulierten Wellenfront ist und ein sogenanntes Phasenhologramm darstellt.

Eine nach Abschluß der Belichtung erfolgende komplette Polymerisation mit diffusem, nicht kohärentem UV-Licht fixiert den beschriebenen Zustand dauerhaft. Zusätzlich kann in einem nachfolgenden Schritt das erhaltene Hologramm in einem Ofen bei erhöhter Temperatur für eine bestimmte Zeit gelagert werden, wodurch der Unterschied der Brechungsindizes in den zuvor Belichteten beziehungsweise unbelichteten Stellen weiter erhöht wird, was zu einer Erhöhung des Beugungswirkungsgrades führt. Dieser Prozess wird auch Temperung genannt.

Dieses Verfahren wird bereits zur Vervielfältigung von Hologrammen in entsprechenden Maschinen eingesetzt. Der Hauptnachteil dabei ist jedoch wiederum, daß lediglich identische Kopien eines Masterhologramms vervielfältigt werden. Das Masterhologramm selbst wird in konventioneller Weise in einem optischen Labor erzeugt.

Aufgabe der Erfindung ist es, ein Verfahren zur Herstellung individualisierter bzw. personalisierter diffraktiver Elemente, z.B Hologramme zu schaffen, ohne dabei auf die Herstellung oder Verwendung von Hologrammvorlagen wie Masterhologramme, Shims etc. zurückgreifen zu müssen. Ebenso ist es Aufgabe eine zur Durchführung des Verfahrens geeignete Vorrichtung bereitzustellen, sowie Gegenstände mit individuellen variablen diffraktiven Elementen möglichst einfach und kostengünstig zu versehen.

Die Aufgabe wird dadurch gelöst, dass in einem sich wiederholenden Herstellungsprozeß aufeinanderfolgend herzustellende diffraktive Elemente variiert werden durch Änderung der zu übertragenden holographischen Information in die Aufzeichnungsschicht und/oder durch Änderung der Anordnung der lichtempfindlichen Aufzeichnungsschicht auf der Oberfläche.

Eine Variabilität des diffraktiven Elementes, z.B. eines Hologrammes ergibt sich somit durch zwei auch miteinander kombinierbare Methoden.

Durch dieses Verfahren ist es möglich innerhalb eines kontinuierlich arbeitenden Produktionsprozesses variable und individualisierte/personalisierte diffraktive Elemente, z.B. Hologramme zu erstellen, wobei die Variabilität zum einen in der Hologrammstruktur liegen kann, d.h. in der Information die in die Aufzeichnungsschicht einbelichtet wird.

Zum anderen kann die Aufzeichnungsschicht von Gegenstand zu Gegenstand in unterschiedlicher Anordnung aufgetragen sein oder aufgetragen werden. Hier kann die variable Anordnung der Aufzeichnungsschicht eine änderbare Information darstellen. Beide Arten der Variierbarkeit können auch miteinander kombiniert werden.

Hinsichtlich der Aufzeichnungsschicht ist anzumerken, dass diese z.B. in einem vorgeschalteten Herstellungsprozeß auf die Gegenstände aufgetragen worden sein kann und zwar entweder jeweils identisch oder von Gegenstand zu Gegenstand geändert. So kann dann anschließend im erfindungsgemäßen Verfahren z.B. bei jeweils identischer Anordnung der Auszeichnungsschicht auf einem Gegenstand immer eine unterschiedlichen Information in die Aufzeichnungsschicht holografisch belichtet werden, um eine Variabilität zu erreichen.

Bei von Gegenstand zu Gegenstand unterschiedlichen Anordnungen der Aufzeichnungsschicht kann immer dieselbe Information oder aber auch von Gegenstand zu Gegenstand geänderte Information in die Aufzeichnungsschicht belichtet werden.

Hierbei ist es auch möglich, die Aufzeichnungsschicht erst unmittelbar vor der holografischen Informationsübertragung auf eine Oberfläche eines Gegenstandes aufzubringen.

Bevorzugt kann eine Änderung der zu übertragenden holographischen Information durch eine Änderung wenigstens einer holographisch zu übertragenden variablen Objektvorlage erfolgen, insbesondere wobei die Objektvorlage computergesteuert änderbar ist.

So kann eine änderbare Objektvorlage in einer üblichen holografischen Belichtungsanordnung mit Objektstrahl und Referenzstrahl in die Aufzeichnungsschicht einbelichtet werden, wo beide Strahlen interferieren.

Ebenso kann das zu belichtende Interferenzmuster bereits ohne physikalisch stattfindende Interferenz originär mit einem Computer erzeugt werden und in die Aufzeichnungsschicht einbelichtet werden. Aufgrund der Computererzeugung ist eine Variabilität gegeben, da jeweils ein umprogrammierbares Interferenzmuster in der Aufzeichnungsschicht erzeugbar und in die Schicht einbelichtbar ist.

Die variablen zu belichtenden Informationen können dabei jeweils z.B. von einem Computersystem in Form von Bildern, Texten, oder maschinenlesbare Codes oder maschinenlesbare Hologramme in Form eines Hologramms erzeugt werden.

Bei einer variablen Objektvorlage kann es sich um jegliches Objekt handelt, welches z.B. automatisch und insbesondere computergestützt in seiner optischen Erscheinung geändert werden kann, also z.B. um eine programmierbare Anzeigevorrichtung, insbesondere um eine Flüssigkristallanzeige.

Die Information die aktuell im Belichtungsprozess in der Anzeigevorrichtung dargestellt wird, wird sodann in das diffraktive Element übernommen. So können z.B. in aufeinanderfolgend herzustellende diffraktive Elemente laufend geänderte Bild-/Textinformationen, insbesondere eine laufende Nummerierung übertragen werden.

Wie schon eingangs erwähnt kann eine lichtempfindliche Aufzeichnungsschicht im Herstellungsprozeß vor der Übertragung der holografischen Information auf die Oberfläche eine Gegenstandes aufgetragen werden. Hierbei kann es sich um eine innere und/oder äußere Oberfläche des Gegenstandes handeln, wobei bevorzugt bei einer inneren Oberfläche das darüberliegende Material transparent ist, um eine Belichtung durch dieses Material in die Aufzeichnungsschicht zu ermöglichen.

Die Aufzeichnungsschicht kann hierbei typische Silberhalogenidverbindungen aufweisen und/oder auch ein Photopolymer umfassen. Hierbei kann es vorgesehen sein, die aufgetragene Aufzeichnungsschicht vor der Belichtung auf der Oberfläche mechanisch zu fixieren, um z.B. ein Verlaufen der Schicht zu verhindern. Dies kann z.B. durch Trocknung oder Verdunstung von Lösungsmitteln, Härtung der Bindemittel etc. erfolgen.

Besonders bevorzugt wird die lichtempfindliche Aufzeichnungsschicht, insbesondere ein Photopolymer, durch Sprühen, Tauchen und/oder ein Druckverfahren, insbesondere Tintenstrahldruck auf die Oberfläche eines Gegenstandes aufgetragen. Gerade bei Verwendung von Druckverfahren, insbesondere Tintenstrahldruck kann die Anordnung der Aufzeichnungsschicht leicht von Gegenstand zu Gegenstand geändert werden.

Bei einer Ändernung sowohl der Anordnung der Aufzeichnungsschicht als auch der holografisch zu übertragenden Information von Gegenstand zu Gegenstand kann es weiterhin vorgesehen sein, dass die durch die Anordnung der Aufzeichnungsschicht dargestellte Information mit einer holographisch in die Aufzeichnungsschicht eingebrachte Information korreliert ist. So kann z.B. die Aufzeichnungsschicht in Form eines Textes oder Bildes aufgetragen werden wobei gleichzeitig derselbe Text bzw. dasselbe Bild in die Aufzeichnungsschicht einbelichtet wird.

Mittels des erfindungsgemäßen Verfahren können beliebige Gegenstände mit insbesondere beliebigen Oberflächen (plan oder erhaben) mit nahezu nicht fälschbaren diffraktiven Elementen versehen werden.

Bei einer Vorrichtung zur Herstellung eines Gegenstandes mit einem diffraktiven Element, insbesondere einer holographischen Kennzeichnung, kann es sich um eine Druckmaschine handeln, mittels der eine lichtempfindliche Aufzeichnungsschicht auf eine Oberfläche eines Gegenstandes aufgedruckt wird. Hierbei kann die Druckmaschine eine holografische Belichtereinheit aufweisen, mittels der eine holografische Information, insbesondere eine variable Objektvorlage in die aufgetragene Aufzeichnungsschicht übertragbar ist.

In einer Ausführung können insbesondere lichtempfindliche Polymere als Aufzeichnungsschicht auf die Oberfläche eines beliebigen Gegenstandes aufgetragen werden. Diese Polymere lassen sich ähnlich wie Lacke aus der Druckindustrie in konventionellen Druckmaschinen, z.B. Flexodruckmaschinen, Offsetdruckmaschinen, Siebdruckmaschinen oder Tampondruckmaschinen etc. verarbeiten.

Diese Polymere lassen sich auch wie konventionelle InkJet Farben in Tintenstrahldruckern einsetzen. Dazu werden die rheologischen Eigenschaften wie z.B. statische und dynamische Viskosität, Abrißverhalten etc. in geeigneter Weise an die Anforderungen des verwendeten Tintenstrahldruckers angepasst. Dies kann durch Zugabe von reaktiven Lösungsmitteln, verdampfenden Lösungsmitteln, Füllstoffen, etc. geschehen. Es können zusätzlich geeignete Pigmente zugefügt werden, um zusätzliche optische Effekte zu erzeugen wie z.B. Fluoreszenz oder Phosphoreszenz.

Zur Verarbeitung der angepassten Polymere sind prinzipiell alle Verfahren der Tintenstrahldrucker wie continuous InkJet oder Drop-on-demand InkJet verfahren geeignet. Die Arbeitsweise kann wie folgt beschrieben werden.

Ein beliebiges Objekt wird mittels eines Tintenstrahlduckers bedruckt, der das oben genannte Polymer anstelle einer üblichen Tinte benutzt. Das Druckbild wird von einem Computersystem und einer geeigneten Software an den Tintenstrahldrucker geschickt. Es lassen sich so in konventioneller Weise beliebige Texte, Logos oder Bilder auf eine Oberfläche aufdrucken. Die so gedruckte Information wird in einem nachfolgenden Schritt mit einer Hologramminformation in der oben genannten Art und Weise versehen. Die Hologramminformation ist dabei zweckmäßigerweise mit der gedruckten Information korreliert.

So kann beispielsweise die gleiche Information in das Hologramm eingeschrieben werden, oder eine veränderte Information, die über einen mathematischen Algorithmus oder über ein optisches System mit der gedruckten Information korreliert. Damit ist es möglich, freiprogrammierbar Informationen in doppelter Art und Weise und in Abhängigkeit voneinander auf eine Oberfläche zum Beispiel eines Ausweisdokuments zu bringen.

So lassen sich besonders einfach und kostengünstig mit dem Tintenstrahldruck, aber auch mit anderen Druckverfahren unterschiedliche Produkte wie zum Beispiel Papier- oder Kunststoffbögen, Folien, Smart Cards, Ausweise, CD'S oder DVD's etc. beschichten, deren beschichtete Oberfläche nun als photoempfindliches Aufnahmemedium für ein Hologramm dienen kann. Die Aufnahme des Hologrammes erfolgt in einer der üblichen bekannten Arten z.B. als Reflexionshologramm oder Transmissionshologramm, abhängig von der Anwendung und der Materialeigenschaften der Trägermaterialien.

Dazu wird das beschichtete Objekt als "Photoplatte" beispielsweise in einer üblichen holographischen Anordnung an die Stelle der konventionellen Photoplatte gebracht und in geeigneter Weise z.B. mittels Laserstrahlung belichtet. Dabei ist es unerheblich, ob die Oberfläche des Objektes plan oder gekrümmt, d.h. räumlich ausgeformt ist. Auf diese Weise lassen sich beispielsweise auch dreidimensionale Objekte an Ihren Oberflächen mit Hologrammen versehen.

Als Beispiel lassen sich so Hohlkörper aus Glas oder Kunststoff wie Flaschen oder Kugeln beispielsweise Christbaumkugeln mit einem Hologramm versehen. Hierzu wird das Innere eines transparenten Hohlkörpers aus Glas oder Kunststoff mit dem Polymer beschichtet, indem einfach das Polymer durch eine vorhandene Öffnung in den Hohlkörper eingefüllt wird und durch Schwenken die Innenwandung vollständig benetzt wird. Das überschüssige Polymer wird durch die vorhandene Öffnung abgegossen und weiterverwendet.

Nach dem Verdunsten eines in dem Polymer vorhandenen Lösungsmittels wird der Hohlkörper in einer holographischen Anordnung als Photoplatte verwendet, um ein Objekt, beispielsweise eine Figur, oder auch einfache diffraktive Strukturen zur Erzeugung von optischen Effekten darzustellen.

Nach der Belichtung mit dem Laserlicht erfolgt anschließend die Fixierung mit UV-Strahlung und eine optionale Temperung im Ofen zu Erhöhung der Beugungseffizienz. Um die Sichtbarkeit des Hologramms für einen Betrachter weiter zu erhöhen kann das Innere des Hohlkörpers zusätzlich mit einer dunklen Farbe in gewohnter Weise beschichtet werden.

Vorteilhaft bei der Verwendung des Polymers im Inneren des Hohlkörpers ist, dass die holographische Schicht im Inneren eines Körpers gut gegen mechanische und chemische Einflüsse geschützt ist.

Unabhängig von dem konkreten Ausführungsbeispiel des Hohlkörpers können die genannten Verfahrenschritten ebenso bei allen anderen beliebigen Gegenständen in der beschriebenen Art eingesetzt werden.

Durch Verwendung z.B. eines frei programmierbaren LCD-Displays als Objekt, das holographiert wird, können in einem Produktionsablauf variable Daten in das Hologramm übertragen werden, wodurch eine Personalisierung des Hologrammes ermöglicht wird.

Beispielsweise lassen sich so durch eine laufende Nummerierung, individuelle Namen, Bilder oder unter Verwendung mehrerer solcher Displays auch eine Kombination daraus personalisierte echte Hologramme herstellen.

Die verwendete Strahlungsquelle, z.B. ein Laser (Festkörperlaser, Halbleiterlaser, Gaslaser) arbeitet in einer Ausführungsform in einem kontinuierlichen Betrieb. In dieser Ausführungsform wird ein stabiler mechanischer Aufbau der Belichtungseinheit gefordert. Der Grund hierfür ist, daß ein Hologramm eine Momentaufnahme eines räumlich modulierten elektromagnetischen Wellenfeldes darstellt, welches innerhalb einer lichtempfindlichen Schicht festgehalten werden soll.

Dieses räumlich modulierte Wellenfeld besteht aber aus Zonen hoher Lichtintensität und eng benachbarten Zonen geringer Lichtintensität, wobei der Abstand der Zonen im Bereich einer halben Wellenlänge des verwendeten Lichtes liegt. Bei Verwendung eines bei 532nm emittierenden Lasers, einem frequenzverdoppelten Neodym YAG Laser, sind dies 266nm.

Befindet sich nun die lichtempfindliche Aufnahmeschicht, in diesem Fall das lichtempfindliche Polymer, in dem genannten Bereich des Wellenfeldes, so bewirken die Zonen hoher Lichtintensität lokal einen Start der Polymerisation. Würde sich nun durch eine Erschütterung oder einen anderen Einfluß eine Verschiebung des modulierten Wellenfeldes innerhalb der Aufzeichnungsschicht ergeben, so würde in diesem Fall die Polymerisation benachbarte Zonen, die zur Erzeugung eines Hologramms zu diesem Zeitpunkt unpolymerisiert bleiben sollen, ebenfalls gestartet, so daß über die gesamte Belichtungsdauer die Polymerschicht vollständig und mikroskopisch betrachtet homogen belichtet werden würde.

In diesem Fall wird kein Hologramm in der Polymerschicht gespeichert. Die Belichtungszeiten und damit die Zeiten, während der keine Verschiebungen stattfinden dürfen, liegen bei Verwendung eines kontinuierlich arbeitenden Lasers üblicherweise im Bereich von unter 1 sec. bis zu mehreren Minuten, was für die Erzeugung von Hologrammen einen stabilen und erschütterungsfreien mechanischen Aufbau erfordert.

In einer anderen Ausführungsform wird das Hologramm mittels eines kurzen Lichtimpulses in die photoempfindliche Schicht geschrieben, was den Vorteil besitzt, daß der gesamte mechanische Aufbau gegen Erschütterungen unempfindlicher sein kann als bei Verwendung eines kontinuierlich arbeitenden Lasers. Durch die Verwendung möglichst kurzer und intensiver Laserimpulse reduziert sich naturgemäß auch die oben genannte Zeit, während der keine Verschiebung oder Veränderung des Wellenfeldes stattfinden darf, auf die Zeit des Laserimpulses. Mechanische Schwingungen, deren Periodendauer größer sind als die Dauer des Laserimpulses können daher keine für die Erzeugung des Hologramms störende Veränderung des Wellenfeldes bewirken.

Verwendet werden hier beispielsweise Laser die mittels Blitzlampen gepumpt werden, so daß nur im wesentlichen während der Dauer des Anregungsblitzes auf das laseraktive Medium im Laser eine Laserstrahlung ausgesendet wird. Die Dauer des Laserimpulses liegt hier im Bereich von 0,1ms bis 10ms. Kürzere Laserimpulse lassen sich durch die zusätzliche Verwendung eines Güteschalters erreichen, der entweder aktiv gesteuert wird oder als passives Element ausgeführt sind. Werden lediglich kleine Hologrammflächen benötigt, lassen sich auch kontinuierlich gepumpte Laser verwenden, deren Ausgangsstrahlung mit aktiven Güteschaltern oder mit passiven Güteschaltern gepulst ist. Mit solchen Anordnungen lassen sich Pulsfolgefrequenzen von mehreren 10kHz erzeugen, was eine hohe Produktionsgeschwindigkeit ermöglicht.

Beispiele für aktive Güteschalter sind akusto-optische Modulatoren, Kerrzellen oder Pockelszellen, Beispiele für passive Güteschalter sind sogenannte sättigbare Absorber in flüssiger oder fester Form. Die Dauer solcher Laserimpulse liegt hier üblicherweise im Bereich von 10ns bis 500ns, so daß sich Erschütterungen kaum mehr negativ bemerkbar machen.

## Patentansprüche

1. Verfahren zur Herstellung von diffraktiven Elementen, insbesondere von Hologrammen, auf der Oberfläche eines Gegenstands, wobei in eine auf der Oberfläche aufgetragenen lichtempfindlichen Aufzeichnungsschicht eine holographische Information übertragen wird, insbesondere durch Belichtung, **dadurch gekennzeichnet, daß** in einem sich wiederholenden Herstellungsprozeß aufeinanderfolgend herzustellende diffraktive Elemente variiert werden durch Änderung der zu übertragenden holographischen Information und/oder durch Änderung der Anordnung der lichtempfindlichen Aufzeichnungsschicht auf der Oberfläche.

2. Verfahren nach Anspruch 1, **dadurch gekennzeichnet, dass** eine Änderung der zu übertragenden holographischen Information durch eine Änderung wenigstens einer holographisch zu übertragenden variablen Objektvorlage erfolgt, insbesondere wobei die Objektvorlage computergesteuert änderbar ist.

3. Verfahren nach Anspruch 2, **dadurch gekennzeichnet, dass** es sich bei einer Objektvorlage um eine programmierbare Anzeigevorrichtung handelt, insbesondere um eine Flüssigkristallanzeige.

4. Verfahren nach einem der vorherigen Ansprüche, **dadurch gekennzeichnet, dass** für aufeinanderfolgend herzustellende diffraktive Elemente laufend geänderte Bild-/Textinformationen, insbesondere eine laufende Nummerierung in die Aufzeichnungsschicht übertragen werden.

5. Verfahren nach einem der vorherigen Ansprüche, **dadurch gekennzeichnet, dass** eine lichtempfindliche Aufzeichnungsschicht im Herstellungsprozeß vor der Übertragung der holografischen Information auf die Oberfläche aufgetragen wird.

6. Verfahren nach Anspruch 5, **dadurch gekennzeichnet, dass** die lichtempfindliche Aufzeichnungsschicht, insbesondere ein Photopolymer, durch Sprühen, Tauchen und/oder ein Druckverfahren, insbesondere Tintenstrahldruck auf eine innere und/oder äußere Oberfläche des Gegenstandes aufgetragen wird.

7. Verfahren nach einem der vorherigen Ansprüche, **dadurch gekennzeichnet, dass** eine durch die Anordnung der Aufzeichnungsschicht dargestellte Information mit einer holographisch in die Aufzeichnungsschicht eingebrachte Information korreliert ist.

8. Verfahren nach einem der vorherigen Ansprüche 1 bis 6, **dadurch gekennzeichnet, dass** eine auf dem Gegenstand vorhandene Information mit einer holographisch in die Aufzeichnungsschicht eingebrachte Information korreliert ist

9. Gegenstand mit mindestens einem diffraktiven Element, insbesondere einer holographischen Kennzeichnung, **dadurch gekennzeichnet, dass** das diffraktive Element gemäß einem Verfahren nach einem der vorherigen Ansprüche auf den Gegenstand aufgebracht wurde.

10. Gegenstand mit mindestens einem diffraktiven Element, insbesondere einer holographischen Kennzeichnung, **dadurch gekennzeichnet, dass** das diffraktive Element ein Sicherheitsmerkmal eines Dokumentes oder Wertpapiers insbesondere eines Ausweises, einer Banknote oder einer Geldkarte darstellt

11. Vorrichtung zur Herstellung eines Gegenstandes mit einem diffraktiven Element, insbesondere einer holographischen Kennzeichnung, mit der eine holographische Information in eine auf der Oberfläche des Gegenstandes aufgetragene lichtempfindliche Aufzeichnungsschicht übertragbar ist, insbesondere durch Belichtung, **dadurch gekennzeichnet, daß** in einem sich wiederholenden Herstellungsprozeß aufeinanderfolgend sich unterscheidende diffraktive Elemente herstellbar sind.

12. Vorrichtung nach Anpruch 11 , **dadurch gekennzeichnet, dass** innerhalb der Vorrichtung mindestens eine Druckeinheit enthalten ist, mittels der eine lichtempfindliche Aufzeichnungsschicht auf eine Oberfläche eines Gegenstandes aufgedruckt wird.

13. Vorrichtung nach Anspruch 12, **dadurch gekennzeichnet, dass** die Druckeinheit, mittels der eine lichtempfindliche Aufzeichnungsschicht auf eine Oberfläche eines Gegenstandes aufgedruckt wird, frei programmierbar ist

14. Vorrichtung nach Anspruch 12, **dadurch gekennzeichnet, dass** die Druckmaschine eine holografische Belichtereinheit aufweist, mittels der eine holografische Information, insbesondere eine variable Objektvorlage, in die aufgetragene Aufzeichnungsschicht übertragbar ist.

15. Vorrichtung nach Anspruch 12 **dadurch gekennzeichnet, dass** mindestens ein Modul zur Fixierung der holographischen Informationen in der lichtempfindlichen Aufzeichnungsschicht vorhanden ist.
